# EUROPEAN PATENT APPLICATION

(11) **EP 4 539 153 A1**
(43) Date of publication of application: **16.04.2025**
(21) Application number: 23907640.9
(22) Date of filing: 15.12.2023
(51) Int. Cl.: H01M 4/1395, H01M 4/66, H01M 4/04, H01M 10/0585

(54) **MANUFACTURING METHOD OF UNIT LITHIUM ELECTRODE, AND MANUFACTURING METHOD OF ELECTRODE STACKS INCLUDING SAME**

(30) Priority: 19.12.2022 KR 20220178485
(71) Applicant: LG Energy Solution, Ltd., Seoul 07335 (KR)
(72) Inventor: KIM, Taejong, Daejeon 34122 (KR)
(74) Representative: Hoffmann Eitle
(86) International application number: PCT/KR2023/020832
(87) International publication number: WO 2024/136355

(57) **Abstract**

The present disclosure relates to a manufacturing method of a unit lithium electrode comprising: removing a protective film by an adhesive film having an adhesive layer formed on one side of the substrate film, after cutting a sheet-shaped lithium metal electrode into the size of the unit lithium electrode, wherein the sheet-shaped lithium metal electrode includes a current collector, a lithium metal layer formed on one side or both sides of the current collector, and a protective film attached to the surface of the lithium metal layer, and to a manufacturing method of electrode stacks comprising the same.

## Description

### [TECHNICAL FIELD]

### Cross Citation with Related Application(s)

This application claims the benefit of Korean Patent Application No. 10-2022-0178485 filed on December 19, 2022 with the Korean Intellectual Property Office, the disclosure of which is incorporated herein by reference in its entirety.

The present disclosure relates to a manufacturing method of a unit lithium electrode and a manufacturing method of electrode stacks comprising the same.

### [BACKGROUND]

With increases in technology developments and demands for mobile devices, demands for secondary batteries as an energy source have rapidly increased. Among such secondary batteries, lithium secondary batteries having high energy density and operating potential, a long cycle lifetime and a low self-discharge rate have been commercialized and widely used.

Representatively, in terms of the shape of batteries, the demand for prismatic secondary batteries or pouch-shaped secondary batteries which are thin enough to be applied to products, such as mobile phones, is very high, and in terms of the material for batteries, the demand for lithium secondary batteries, such as lithium ion batteries and lithium ion polymer batteries, exhibiting high energy density, discharge voltage, and output stability is very high.

Generally, lithium secondary batteries have a structure in which an electrode assembly consisting of a positive electrode, a negative electrode and a porous separator is impregnated with a non-aqueous electrolyte. Also, generally, a positive electrode is manufactured by coating a positive electrode mixture containing a positive electrode active material onto aluminum foil, and a negative electrode is manufactured by coating a negative electrode mixture containing a negative electrode active material onto a copper foil.

Typically, the positive electrode active material is lithium transition metal oxide, and the negative electrode active material is a carbon-based material.

However, recently, lithium metal batteries that use lithium metal itself exhibiting high energy density as a negative electrode active material have been commercialized.

At this time, the lithium metal used as the negative electrode is a material which is most highlighted as a negative electrode material for a high energy density battery because it has a low density (0.54 g/cm³) and a very low standard reduction potential (-3.045V SHE). In addition, despite the problems that arise due to their high chemical activity, with the continuous increase and rapid development of the use of mobile communication and portable electronic devices in recent years, the demand for the development of high energy density secondary batteries is continuously increasing. Thus, the need for the use of lithium metal negative electrodes continues to rise.

At this time, when a lithium metal electrode is used as the negative electrode, lithium metal is highly reactive and thus, it reacts with moisture in the air to produce by-products such as LiOH, Li₂O, Li₂CO₃, and Li₃N. This may significantly deteriorate performance of the produced batteries and even lead to an internal short circuit. In addition, lithium is a metal with very low strength, which is problematic that it is difficult to utilize it immediately as a metal.

Therefore, when using lithium metal as a negative electrode active material, it is common to deliver a polymer carrier film such as PET film attached to the lithium metal electrode as a protective film. Nevertheless, since the protective film must be removed before assembling the electrode assembly, it is better to remove the protective film as slow as possible. However, when cutting is performed along with the protective film to produce a unit electrode, the lithium metal and the protective film adhere to the cut surface together due to the cutting pressure. When the protective film is removed before cutting, the problem of reactivity of lithium metal still remains.

Therefore, there is a need to develop a technology that can solve such problems and provide unit lithium electrodes having excellent quality that can be used in lithium metal batteries.

### [DETAILED DESCRIPTION OF THE INVENTION)

### [Technical Problem]

It is an object of the present disclosure to provide a manufacturing method of a unit lithium electrode, which can effectively remove a protective film from a lithium electrode after cutting it into the size of the unit lithium electrode.

It is another object of the present disclosure to provide a manufacturing method of electrode stacks using the unit lithium electrode after manufacturing it.

### [Technical Solution]

According to one embodiment of the present disclosure, there is provided a manufacturing method of a unit lithium electrode comprising: removing a protective film by an adhesive film having an adhesive layer formed on one side of the substrate film, after cutting a sheet-shaped lithium metal electrode into the size of the unit lithium electrode, wherein the sheet-shaped lithium metal electrode includes a current collector, a lithium metal layer formed on one side or both sides of the current collector, and a protective film attached to the surface of the lithium metal layer.

Wherein, the protective film may be at least one selected from the group consisting of a polymer film, a polymer electrolyte film, a release film, a vapor deposition film, a metal foil, a glass fiber fabric, and a functional multilayer film.

Further, the manufacturing method of a unit lithium electrode may further comprise a tab-forming cutting step of forming a tab before, after, or simultaneously with cutting the sheet-shaped lithium metal electrode into the size of the unit lithium electrode.

Meanwhile, the step of removing a protective film may be performed by bringing the adhesive layer of the adhesive film into contact with the surface of the protective film and then peeling it off. At this time, the adhesive layer of the adhesive film for removal may be formed entirely on one side of the substrate film, or may be formed in a pattern shape such as a line shape or a dot shape.

Furthermore, the manufacturing method of a unit lithium electrode may further comprise pressing the unit lithium electrode after removing the protective film.

Wherein, the pressing may be performed by a pair of pressing rollers.

According to another embodiment of the present disclosure, there is provided a manufacturing method of electrode stacks for a lithium metal battery, comprising: preparing a unit lithium electrode using the manufacturing method of a unit lithium electrode, and stacking the unit lithium electrode together with a separator, or a positive electrode and a separator.

At this time, the electrode stack may be a bi-cell in which electrodes at both ends have the same polarity, a full cell in which electrodes at both ends have different polarities, a mono-cell configured to stack a separator and a unit lithium electrode, or a stacked electrode assembly in which two or more positive electrodes and the unit lithium electrodes are arranged alternately with a separator being interposed therebetween.

### [Advantageous Effects]

A manufacturing method of a unit lithium electrode according to the present disclosure removes the protective film after cutting into the unit lithium electrode, the method simply remove the protective film using an adhesive film having an adhesive layer formed on one side, and can maintain the protective film for as long as possible while minimizing the influence on the lithium metal layer caused by removal of the protective film, which have the effect of preventing contamination due to the high reactivity of lithium metal.

### [BRIEF DESCRIPTION OF THE DRAWINGS]

FIG. 1 is a schematic diagram of a manufacturing method of a unit lithium electrode and an electrode stack according to an embodiment of the present disclosure.
FIG. 2 is a cross-sectional view of a sheet-shaped lithium metal electrode according to an embodiment of the present disclosure.
FIGS. 3 and 4 are schematic diagrams of an adhesive film used for removing a protective film according to an embodiment of the present disclosure.

### [DETAILED DESCRIPTION OF THE EMBODIMENTS]

The terms and words used in the present specification and claims should not be interpreted as being limited to typical meanings or dictionary definitions, but should be interpreted as having meanings and concepts relevant to the technical scope of the present disclosure based on the rule according to which an inventor can appropriately define the terms and words as terms for describing most appropriately the best method he or she knows for carrying out the invention. Accordingly, the embodiments described herein and the configurations shown in the drawings are only most preferable embodiments of the present disclosure and do not represent the entire spirit of the present disclosure, so it should be appreciated that there may be various equivalents and modifications that can replace the embodiments and the configurations at the time of filing the present application, and the scope of the present invention is not limited to the embodiments described below.

Hereinafter, the present disclosure will be described in detail with reference to the accompanying drawings and exemplary embodiments. Terms or words used in the specification and the appended claims should not be construed as limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

Further, the embodiments described herein and the configurations shown in the drawings are only most preferable embodiments of the present disclosure and do not represent the entire spirit of the present disclosure, so it should be appreciated that there may be various equivalents and modifications that can replace the embodiments and the configurations at the time of fling the present application.

According to one embodiment of the present disclosure, there is provided a manufacturing method of a unit lithium electrode comprising: removing a protective film by an adhesive film having an adhesive layer formed on one side of the substrate film, after cutting a sheet-shaped lithium metal electrode into the size of the unit lithium electrode, wherein the sheet-shaped lithium metal electrode includes a current collector, a lithium metal layer formed on one side or both sides of the current collector, and a protective film attached to the surface of the lithium metal layer.

Next, for convenience of understanding, the manufacturing method of the unit lithium electrode will be described with reference to the accompanying drawings.

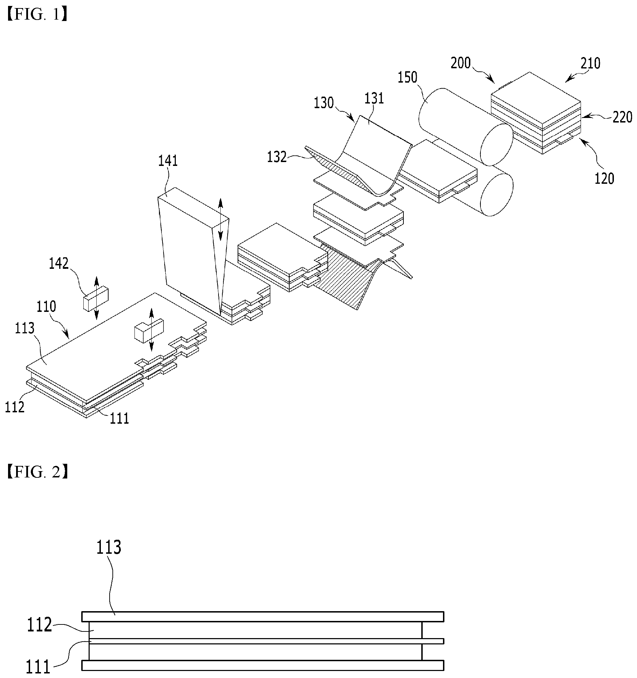

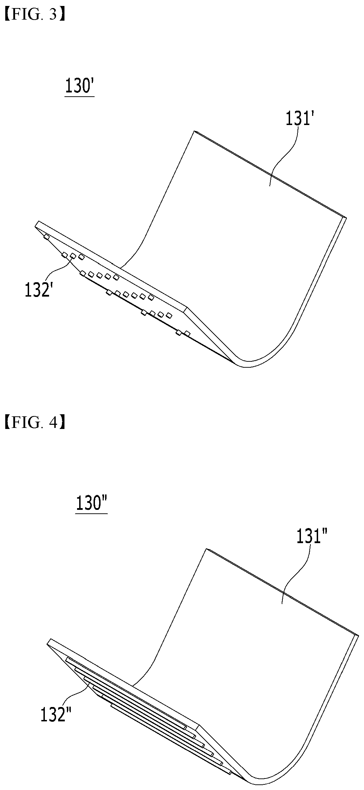

FIG. 1 is a schematic diagram of a manufacturing method of a unit lithium electrode and an electrode stack according to an embodiment of the present disclosure, FIG. 2 is a cross-sectional view of a sheet-shaped lithium metal electrode according to an embodiment of the present disclosure, and FIGS. 3 and 4 are schematic diagrams of an adhesive film used for removing a protective film according to an embodiment of the present disclosure.

Referring to these drawings, first, in order to manufacture a unit lithium electrode, a sheet-shaped lithium metal electrode 110 is provided.

As explained above, since lithium metal is very soft and highly reactive, it is generally introduced in the state where a protective film is attached onto the lithium metal layer, rather than being introduced into the process in the state where the lithium metal layer is exposed on the surface.

Specifically, the sheet-shaped lithium metal electrode 110 includes a current collector 111, a lithium metal layer 112 formed on both sides of the current collector 111, and a protective film 113 attached to the surface of the lithium metal layer 112.

Here, the current collector 111 is not limited to the current collector conventionally used for negative electrodes, and can be used in various ways. For example, various metals or alloys such as copper, silver, or nickel may be used. The current collector 111 plays the role of reinforcing the strength of the lithium metal layer, which is a lithium ion source, provided in the lithium battery and improving handling properties.

The lithium metal layer 112 may be attached to the current collector 111 using an adhesive material, or may be attached by pressing with a plate press, or may deposit lithium metal, or may be formed on the current collector 111 from another base material by a transfer method. That is, the method of forming the lithium metal layer 112 on the current collector 111 is not limited as long as the lithium metal layer 112 is in a form that is attached to the current collector 111.

This lithium metal layer 112 serves to provide lithium ions, and may be formed to have a thickness of 0.1 micrometers to 30 micrometers, specifically 1 micrometer to 30 micrometers, and more specifically 5 micrometers to 20 micrometers.

If the thickness is outside the above range and is too thin, it is difficult to provide sufficient lithium ions, and if the thickness is too thick, the capacity relative to the volume becomes small, which is not preferable.

The protective film 113 serves to protect lithium metal from moisture in the air. Here, the protective film 113 may be formed of a polymer film, a polymer electrolyte film, a release film, a vapor deposition film, a metal foil, a glass fiber fabric, a functional multilayer film, and the like.

Here, the polymer film is processed by treating the surface of the film made of a polyvinylidene fluoride(PVDF), polyvinylidene fluoride-hexafluoropropene(PVDF-HFP), polyester, polyethylene(PE), polypropylene(PP), polyolefin, polyamide, and the like by coating or vapor deposition, and can be provided with various functions if necessary.

As the polymer electrolyte film, PEO, polysiloxane, PDMS, PMMA, PAN-based polymers, acrylate-based polymers, and the like can be used. Moisture permeability can be imparted to the surface of the protective film 113, and the moisture permeability of the protective film 113 can be set to 0 to 10 g/m²/day.

The vapor deposition film allows metal to be deposited on the film to cut off moisture. Films such as polypropylene(PP), polyethylene(PE), polyethylene terephthalate(PET), and nylon are mainly used. Metal foil, such as aluminum foil or copper foil, may be used as the protective film 113.

The glass fiber has high strength, and can be used in the protective film 113 to increase the strength of the film. It can also be used by coating polymers such as PVDF, PVDF-HFP, PE, and PP onto glass fiber fabric.

The functional multilayer film is processed by stacking or coating various resins on a substrate film, and have various functions depending on the selected resin.

As the protective film 113, in addition to such functional films, films made of common plastic films such as polypropylene, polyethylene, PET, nylon, polyester, polyolefin, and polyamide can be used.

Alternatively, the protective film 113 may contain a resin that cut off or absorbs moisture.

The protective film 113 may be formed by attaching the above film form onto the lithium metal layer 112. In this case, an adhesive material may be coated onto the surface of the protective film 113 facing the lithium metal layer 112, or an adhesive material may be coated onto the lithium metal layer 112 and the protective film 113 may be attached, or the film 113 itself may be made of a polymer material containing adhesive properties.

Alternatively, it may be formed by coating the protective film composition solution onto the lithium metal layer 112 and then drying it.

Here, the thickness of the protective film 113 may be 10 nanometers to 10 micrometers. If the thickness is less than this, it may not provide sufficient protection from atmospheric moisture, and if the thickness is too thick, it is not economical and thus, the thickness can be appropriately selected to the extent that the lithium metal layer 112 can be protected.

Further, the area of the protective film 113 may be equal to or larger than the area of the lithium metal layer 112. If the area is smaller than that of the lithium metal layer 112, the lithium metal layer 112 cannot be effectively protected. On the other hand, if the area of the protective film 113 is larger than the area of the lithium metal layer 112, it may cover up to a side surface of the lithium metal layer 112, which is more preferable.

According to the present disclosure, this sheet-shaped lithium metal electrode 110 is cut into the size of the unit lithium electrode before removing the protective film 113.

In addition, a cutting step for forming a tab is performed together in order to form a tab before, after, or simultaneously with cutting into the size of the unit lithium electrode.

Here, both the step of cutting the sheet-shaped lithium metal electrode 110 into the size of the unit lithium electrode and the cutting step for forming a tab are performed by the cutting machines 141 and 142.

On the other hand, when the current collector 111, the lithium metal layer 112, and the protective film 113 are all cut at the same time as in the present disclosure, the cutting pressure causes a phenomenon in which the current collector 111, the lithium metal layer 112, and the protective film 113 are pushed in the cutting direction and adhere to the cut surface.

However, a method for effectively removing only the protective film 113 in this form is not known.

Therefore, the inventors of the present application have devised a method that can effectively remove only the protective film 113 in a very simple manner after cutting into the size of the unit lithium electrode.

Specifically, the protective film 113 is removed by the adhesive film 130 in which the adhesive layer 132 is formed on one surface of the substrate film 131.

Specifically, as shown in FIG. 1, the removal is performed by a method in which the adhesive film 130 is positioned so that the adhesive layer 132 of the adhesive film 130 can contact the surface of the protective film 113, then the adhesive layer 132 is brought into contact with the surface of the protective film 113, the protective film 113 is attached to the adhesive film 130 by this adhesive force, and then the protective film 113 is peeled off from the lithium metal layer 112 by moving the adhesive film 130 in a direction away from the lithium metal unit.

In the case of this method, the protective film 113 can be removed in a very simple manner using the adhesive film 130, which can minimize the influence on the surface of the lithium metal layer 112.

At the same time, the sheet-shaped lithium metal electrode 110 is cut into the unit lithium electrode 120, and then the protective film 113 is removed immediately before stacking with the positive electrode and the separator, thereby minimizing the external exposure of the lithium metal layer 112 and effectively preventing it from contamination.

Here, the adhesive layer 132 of the adhesive film 130 may be formed entirely on one side of the substrate film 131 as shown in FIG. 1, or may be formed in a dot-shaped pattern on one side of the substrate film 131' as shown in FIG. 3, or may be formed in a line-shaped pattern on one side of the substrate film 131" as shown in FIG. 4.

That is, the adhesive layer 132 is not limited as long as it can effectively remove the protective film 113 using adhesive force, and may be formed in various shapes.

Further, the shape of the adhesive film 132 is not limited, however, in order to remove only the protective film 113 from the lithium metal layer 112 without affecting other components, the film may be bent into a shape (i.e., a U-shape) in which both ends are bent in a direction opposite to the protective film 113, and can be used in the step of removing the protective film 113. In this case, adhesive force is formed by line contact or surface contact with the protective film 113.

In order to remove the protective film 113 using the adhesive film 130 in this way, the adhesive force between the adhesive film 130 and the protective film 113 must be greater than the adhesive force between the protective film 113 and the lithium metal layer 112.

Therefore, the formation area of the adhesive layer 132 on one side of the substrate film 131 is determined within a range that satisfies this adhesive force. For example, the adhesive layer 132 may be formed to have an area of 30% to 100% of the total area of the substrate film 131.

If the area is outside the above range or too low, sufficient adhesive strength cannot be obtained.

Moreover, the substrate film 131 constituting the adhesive film 130 used herein may be a material similar to the protective film 113, and specifically, it may be a polymer film. For example, the substrate film may be made of PVDF, PVDF-HFP, polyester, polyethylene(PE), polypropylene(PP), polyolefin, or polyamide materials.

As the adhesive layer 132, for example, polydopamine, olefin adhesive, silicone adhesive, acrylic adhesive, rubber adhesive, epoxy adhesive, and the like can be used. Specifically, an acrylic adhesive with excellent adhesive strength can be used.

As described above, the unit lithium electrode 120 from which the protective film 113 is removed makes the surface of the lithium metal layer 112 smooth, and at the same time, a step of pressing the unit lithium electrode 120 may be performed to hold the cell as a whole.

Here, pressing may be performed with a pair of rollers 150. At this time, the pressure can be appropriately selected within a range that makes the surface of the lithium metal layer 112 smooth and does not damage it, in consideration of the soft characteristics of the lithium metal layer 112. For example, the pressing may be performed in the range of 0.1 kgf/mm to 50 kgf/mm.

The unit lithium electrode 120 manufactured in this way can be stacked with the separator 220 and the positive electrode 210 immediately after the protective film 113 is removed, thereby manufacturing the electrode stack 200.

FIG. 1 illustrates an electrode stack 200 in which the positive electrode 210 is stacked with a unit lithium electrode 120 with a separator 220 in interposed therebetween, however, the electrode stack is not limited to such a structure, and can be manufactured in various forms.

For example, the electrode stack may be a bi-cell in which electrodes at both ends have the same polarity, a full cell in which electrodes at both ends have different polarities, a mono-cell configured to stack a separator and a unit lithium electrode, or a stacked electrode assembly in which two or more positive electrodes and the unit lithium electrodes are arranged alternately with a separator being interposed therebetween.

Specifically, the bi-cell may have a structure in which positive electrode/separator/unit lithium electrode/separator/positive electrode or unit lithium electrode/separator/positive electrode/separator/unit lithium electrode are stacked, the full cell may have a structure in which positive electrode/separator/unit lithium electrode are stacked as shown in FIG. 1, and the mono-cell may have a structure in which one or two lithium electrodes and separators are stacked.

After a bi-cell, full-cell or mono-cell is stacked in this way, it is arranged on a separation film and wound in one direction to form a stack-folding type electrode assembly, or is wound in a zigzag shape to form a zigzag type electrode assembly, or is stacked and laminated with a separator interposed therebetween to form a stack-lamination type electrode assembly.

Alternatively, as described above, it may mean a stacked electrode assembly in which two or more electrodes, i.e., a plurality of unit lithium electrodes and a plurality of positive electrodes are alternately arranged at once with a separator interposed therebetween.

Here, the positive electrode is manufactured by coating a positive electrode slurry containing a positive electrode active material, a conductive material, and a binder onto a positive electrode current collector, drying and rolling it.

The positive electrode current collector is not particularly limited as long as it has conductivity while not causing chemical changes to the battery, and for example, stainless steel, aluminum, nickel, titanium, calcined carbon, or aluminum or stainless steel having a surface treated with carbon, nickel, titanium, silver, and the like can be used. In addition, the positive electrode current collector may have a thickness of 3 µm to 500 µm, and may have fine irregularities formed on the surface of the current collector to increase the adhesion strength of the positive electrode active material. For example, it may be used in various forms such as films, sheets, foils, nets, porous bodies, foams, and nonwoven fabrics.

The positive electrode active materials may include a layered compound such as lithium cobalt oxide (LiCoO₂), lithium nickel oxide (LiNiO₂), or a compound substituted with one or more transition metals; lithium manganese oxides such as chemical formulae Li₁₊ₓMn₂₋ₓO₄ (where x is 0 ~ 0.33), LiMnO₃, LiMn₂O₃, LiMnO₂; lithium copper oxide (Li₂CuO₂); vanadium oxides such as LiV₃O₈, LiV₃O₄, V₂O₅, and Cu₂V₂O₇; a Ni-site type lithium nickel oxide represented by chemical formula LiNi₁₋ₓMₓO₂ (where M=Co, Mn, Al, Cu, Fe, Mg, B or Ga, and x=0.01 ~ 0.3); lithium manganese composite oxide represented by chemical formulae LiMn₂₋ₓMₓO₂ (where M = Co, Ni, Fe, Cr, Zn or Ta, and x = 0.01 ~ 0.1) or Li₂Mn₃MO₈ (where, M = Fe, Co, Ni, Cu or Zn); lithium manganese composite oxide having a spinel structure represented by chemical formula LiNiₓMn₂₋ₓO₄; LiMn₂O₄ in which a part of Li in the chemical formula is substituted with an alkaline earth metal ion; disulfide compound; Fe₂(MoO₄)₃, or the like, but are not limited thereto.

The conductive material is used to impart conductivity to the electrode, and the conductive material can be used without particular limitation as long as it has electronic conductivity without causing chemical changes in the battery to be configured. Specific examples thereof include carbon-based materials such as carbon black, acetylene black, ketjen black, channel black, furnace black, lamp black, thermal black, and carbon fiber; graphite such as natural graphite and artificial graphite; metal powder or metal fibers such as copper, nickel, aluminum and silver; conductive whiskey such as zinc oxide and potassium titanate; conductive metal oxides such as titanium oxide; or a conductive polymer such as a polyphenylene derivative, and any one alone or a mixture of two or more of them can be used. The conductive material may be included in an amount of 1 wt.% to 30 wt.%, specifically 1 wt.% to 10 wt.%, and more specifically 1 wt.% to 5 wt.%, based on the total weight of the positive electrode material.

The binder performs the role of improving adhesion between positive electrode active material particles and an adhesive force between the positive electrode active material and the current collector. Specific examples thereof include polyvinylidene fluoride (PVDF), a vinylidene fluoride-co-hexafluoropropylene copolymer (PVDF-co-HFP), polyvinyl alcohol, polyacrylonitrile, carboxymethyl cellulose (CMC), starch, hydroxypropylcellulose, regenerated cellulose, polyvinyl pyrrolidone, polytetrafluoroethylene, polyethylene, polypropylene, an ethylene-propylene-diene monomer (EPDM), a sulfonated EPDM, styrene butadiene rubber (SBR), fluoro rubber, or various copolymers thereof, and any one alone or a mixture of two or more of them can be used. The binder may be included in an amount of 1 wt.% to 30 wt.%, specifically 1 wt.% to 10 wt.%, and more specifically 1 wt.% to 5 wt.%, based on the total weight of the positive electrode material.

The separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable. Specifically, a porous polymer film, for example, a porous polymer film produced using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Further, a typical porous non-woven fabric, for example, a non-woven fabric formed of glass fiber having a high melting point, polyethylene terephthalate fiber, or the like may be used. Further, a coated separator including a ceramic component or a polymer material may be used to secure heat resistance or mechanical strength, and may be selectively used in a single-layered or a multi-layered structure.

As explained above, according to the present disclosure, the unit lithium electrode is protected for as long as possible by the protective film 113 until immediately before the stacking of the positive electrode and the separator, so that the exposure time of the lithium metal layer 112 can be shortened, and the method for removing the protective film 113 can also minimize surface damage to the lithium metal layer 112, thereby having more excellent quality.

In addition, the electrode stack manufactured as above can be manufactured into an electrode assembly and then embedded in a battery case with an electrolyte solution and then sealed to produce a lithium metal battery having excellent quality.

Since other components of lithium metal batteries are known in the art, a description thereof is omitted herein.

It will be apparent to those skilled in the art that various modifications and variations can be made in the present disclosure without departing from the spirit and scope of the present disclosure.

## Claims

1. A manufacturing method of a unit lithium electrode, comprising:
removing a protective film by an adhesive film having an adhesive layer formed on one side of the substrate film, after cutting a sheet-shaped lithium metal electrode into the size of the unit lithium electrode, wherein the sheet-shaped lithium metal electrode includes a current collector, a lithium metal layer formed on one side or both sides of the current collector, and a protective film attached to the surface of the lithium metal layer.

2. The manufacturing method of a unit lithium electrode according to claim 1, wherein:
the protective film is at least one selected from the group consisting of a polymer film, a polymer electrolyte film, a release film, a vapor deposition film, a metal foil, a glass fiber fabric, and a functional multilayer film.

3. The manufacturing method of a unit lithium electrode according to claim 1, wherein:
the manufacturing method of a unit lithium electrode further comprises a tab-forming cutting step of forming a tab before, after, or simultaneously with cutting the sheet-shaped lithium metal electrode into the size of the unit lithium electrode.

4. The manufacturing method of a unit lithium electrode according to claim 1, wherein:
the removing a protective film is performed by bringing the adhesive layer of the adhesive film into contact with the surface of the protective film and then peeling it off.

5. The manufacturing method of a unit lithium electrode according to claim 1, wherein:
the adhesive layer of the adhesive film is formed entirely on one side of the substrate film, or is formed in a pattern shape such as a line shape or a dot shape.

6. The manufacturing method of a unit lithium electrode according to claim 1, wherein:
the adhesive film is used in the step of removing the protective film in a form in which both ends are bent in opposite directions facing the protective film.

7. The manufacturing method of a unit lithium electrode according to claim 1, wherein:
the manufacturing method of a unit lithium electrode further comprises pressing the unit lithium electrode after removing the protective film.

8. The manufacturing method of a unit lithium electrode according to claim 7, wherein:
the pressing is performed by a pair of pressing rollers.

9. A manufacturing method of electrode stacks for a lithium metal battery, comprising:
preparing a unit lithium electrode using the manufacturing method of a unit lithium electrode according to claim 1, and stacking the unit lithium electrode together with a separator, or a positive electrode and a separator.

10. The manufacturing method of an electrode stack according to claim 9, wherein
the electrode stack is a bi-cell in which electrodes at both ends have the same polarity, a full cell in which electrodes at both ends have different polarities, a mono-cell configured to stack a separator and a unit lithium electrode, or a stacked electrode assembly in which two or more positive electrodes and the unit lithium electrodes are arranged alternately with a separator being interposed therebetween.
